# EUROPÄISCHE PATENTANMELDUNG

(11) **EP 1 921 480 A1**
(43) Veröffentlichungstag der Anmeldung: **14.05.2008**
(21) Anmeldenummer: 07021266.7
(22) Anmeldetag: 31.10.2007
(51) Int. Cl.: G02B 7/00, G02B 7/02, G02B 7/04, G02B 7/182

(54) **Optische Vorrichtung mit kinematischen Komponenten zur Manipulation beziehungsweise Positionsbestimmung**

(30) Priorität: 07.11.2006 DE 102006052688
(71) Anmelder: Carl Zeiss SMT AG, 73447 Oberkochen (DE)
(72) Erfinder: Weber, Jochen, 89520 Grosskuchen (DE); Rief, Klaus, 73433 Aalen-Oberalfingen (DE); Matano, Claudia, 89522 Heidenheim (DE); Sigel, Benjamin, 89522 Heidenheim (DE); Siegel, Joachim, 73430 Aalen (DE)
(74) Vertreter: Raunecker, Klaus Peter

(57) **Zusammenfassung**

Die Erfindung betrifft eine optische Vorrichtung mit mindestens einem optischen Element (5), wobei eine Mehrzahl von kinematischen Komponenten (1a, 1b) vorgesehen ist, wobei die Anzahl m der kinematischen Komponenten (1a, 1b) einer Sorte die Anzahl der Freiheitsgrade n, in denen das optische Element (5) manipulierbar ist, übersteigt. Dabei ist mindestens einer der n Freiheitsgrade einer der Freiheitsgrade x-,y-,z-Verschiebung oder Kipp.

## Beschreibung

Die Erfindung betrifft eine optische Vorrichtung mit mindestens einem optischen Element, wobei kinematische Komponenten zur Manipulation beziehungsweise Positionsbestimmung des mindestens einen optischen Elementes vorgesehen sind. Bei den genannten kinematischen Komponenten kann es sich um Aktuatoren oder Sensoren handeln. Ferner betrifft die Erfindung eine Projektionsbelichtungsanlage für die Halbleiterlithographie.

Manipulierbare optische Elemente sind in einer Vielzahl - auch ausgesprochen komplexer - optischer Vorrichtungen ein wesentlicher Bestandteil. Dabei zeigen die optischen Vorrichtungen, in denen die genannten manipulierbaren optischen Elemente Verwendung finden, oftmals einen derart hohen Grad an Komplexität, dass sich die Wartung der zur Manipulation beziehungsweise Positionsbestimmung der optischen Elemente verwendeten kinematischen Komponenten ausgesprochen aufwändig gestaltet. Im allgemeinen werden die genannten Komponenten aus den oben genannten Gründen so ausgelegt, dass sie eine Lebensdauer von mehreren Jahren erreichen. Innerhalb dieser Zeit sollte sich die Performance der Aktuatoren oder Sensoren nicht wesentlich verschlechtern bzw. sollte es zu keinem Ausfall kommen, was sich dahingehend auswirkt, dass die Anforderungen an die kinematischen Komponenten ausgesprochen hoch sind. Als Stand der Technik sei in diesem Zusammenhang die US-Patentanmeldung US2005/190462, die auf die Anmelderin zurückgeht, genannt.

Es ist daher Aufgabe der vorliegenden Erfindung, eine optische Vorrichtung anzugeben, die kinematische Komponenten aufweist, wobei die Vorrichtung in ihrer Funktionalität eine erhöhte Robustheit gegenüber dem Ausfall einzelner kinematischer Komponenten zeigt.

Diese Aufgabe wird durch die Vorrichtungen mit den in den Patentansprüchen 1 und 10 aufgeführten Merkmalen gelöst. Die Unteransprüche beziehen sich auf vorteilhafte Weiterbildungen und Varianten der Erfindung.

Die erfindungsgemäße optische Vorrichtung weist mindestens ein optisches Element, beispielsweise eine in einer Fassung angeordnete Linse oder auch einen Spiegel, auf. Dabei ist eine Mehrzahl von kinematischen Komponenten zur Manipulation beziehungsweise Bestimmung der Position des optischen Elementes vorgesehen. Die kinematischen Komponenten lassen sich also in die Sorten "Aktuatoren" oder "Sensoren" klassifizieren. Die Anzahl m der kinematischen Komponenten mindestens einer Sorte übersteigt die Anzahl der Freiheitsgrade n, in denen das optische Element manipulierbar ist. Mit anderen Worten sind für mindestens einen Freiheitsgrad zwei oder mehr kinematische Komponenten einer Sorte vorgesehen. Idealerweise ist für jeden der möglichen Freiheitsgrade, nämlich Bewegung in x-, y-, und z-Richtung sowie Verkippung mehr als eine kinematische Komponente vorgesehen. Damit wird gewährleistet, dass beispielsweise auch beim Ausfall eines Aktuators noch eine Manipulation des optischen Elementes möglich ist und die Funktionalität der optischen Vorrichtung nicht soweit beeinträchtigt ist, dass eine komplette Demontage zur Sicherstellung der Funktionalität notwendig ist.

In einer vorteilhaften Ausführungsform der Erfindung sind einem Angriffspunkt an dem optischen Element mindestens zwei kinematische Komponenten einer Sorte zugeordnet. Auf diese Weise wird sichergestellt, dass auch beim Ausfall einer der kinematischen Komponenten an dem jeweiligen Angriffspunkt eine Manipulation beziehungsweise eine Bestimmung der Position des optischen Elementes - gegebenenfalls mit Einschränkungen - möglich bleibt.

Eine Variante der Zuordnung von mindestens zwei kinematischen Komponenten zu einem Angriffspunkt besteht darin, dass für einen bestimmten Freiheitsgrad mindestens eine erste kinematische Komponente in der Weise in Bezug zu einer weiteren kinematischen Komponente angeordnet ist, dass bei einer Aktivierung, insbesondere bei einer Bewegung der ersten kinematischen Komponente die weitere kinematische Komponente mit aktiviert, insbesondere mitbewegt wird. Dies kann beispielsweise dadurch erreicht werden, dass es sich bei den kinematischen Komponenten um Piezoaktuatoren handelt, die als Stapel in ihrer Wirkrichtung übereinander angeordnet sind. Der besondere Vorteil der Verwendung von Piezoaktuatoren besteht dabei darin, dass diese Aktuatoren in bekannter Weise als Sensoren verwendet werden können, so dass eine Doppelfunktionalität mit den Vorteilen der Einsparung von Bauraum und Kosten erreicht werden kann. Beim Ausfall eines der Piezoaktuatoren ist aufgrund der gestapelten Anordnung noch eine - wenn auch etwas eingeschränkte - Funktionalität der gesamten Anordnung dahingehend gegeben, dass nach wie vor durch eine Ansteuerung der verbliebenen funktionierenden Aktuatoren eine Bewegung realisiert werden kann, wenn auch gegebenenfalls eine Einschränkung des maximalen Verfahrbereiches hingenommen werden muss.

Selbstverständlich sind als Aktuatoren auch alle anderen Arten von Aktuatoren denkbar, insbesondere Lorentzaktuatoren, Spindelantriebe oder hydraulische oder pneumatische Druckzylinder.

Eine weitere Möglichkeit zur Realisation der erfindungsgemäßen kinematischen Komponenten besteht darin, dass es sich bei der ersten und der weiteren kinematischen Komponente um die einzelnen Piezostapel eines so genannten Piezokrabblers handelt. Bei einem Piezokrabbler handelt es sich um eine lineare Anordnung von miteinander verbundenen Piezoaktuatoren bzw. Piezostapel, die sich durch abwechselnde Aktivierung der Piezoaktuatoren in der Art einer Raupe auf einer Oberfläche fortbewegen. Beispiele für derartige Komponenten finden sich in der US Patentschrift US 6 150 750 B2 und in der deutschen Offenlegungsschrift DE 102 25 266 A1. Dabei kann der Piezokrabbler mit einem optischen Element fest verbunden sein und sich beispielsweise auf einer Oberfläche eines Gehäuses zusammen mit dem optischen Element fortbewegen und auf diese Weise eine Manipulation des optischen Elementes bewirken. Im allgemeinen wird in diesem Fall der Ausfall eines einzelnen Aktuators bzw. Piezostapels zu einer Verringerung der maximalen Verfahrgeschwindigkeit oder zu einer Reduzierung der maximalen Kraft, die von dem Piezokrabbler ausgeübt werden kann, führen. Der Vorteil der Verwendung des Piezokrabblers liegt dabei darin, dass der Ausfall eines einzelnen Aktuators bzw. Piezostapels nicht zu einer Reduzierung des maximalen Verfahrbereiches führt.

Eine Alternative der Anordnung der beiden kinematischen Komponenten aneinander besteht darin, dass für einen bestimmten Freiheitsgrad die mindestens erste kinematische Komponente in der Weise in Bezug zu der weiteren kinematischen Komponente angeordnet ist, dass bei einer Aktivierung der ersten kinematischen Komponente die weitere kinematische Komponente nicht aktiviert, insbesondere nicht mitbewegt wird. Mit anderen Worten sind die beiden kinematischen Komponenten hinsichtlich ihres Angriffspunktes parallel geschaltet.

Ein bevorzugtes Anwendungsgebiet für den Einsatz der oben beschriebenen Vorrichtung und deren Varianten besteht in der Verwendung in einer Projektionsbelichtungsanlage für die Halbleiterlithographie. Die in den genannten Projektionsbelichtungsanlagen verwendeten optischen Systeme zeichnen sich einerseits dadurch aus, dass sie eine enorme Komplexität zeigen. Darüber hinaus sind manipulierbare optische Elemente in derartigen Anlagen weit verbreitet, so dass gerade in dieser Anwendung ein erhöhter Bedarf für eine robuste und ausfallsichere Sensorik und Aktuatorik besteht.

Nachfolgend werden Ausführungsbeispiele der Erfindung an Hand dreier Figuren näher erläutert.

Es zeigen
- Figur 1: eine Ausführungsform der Erfindung, bei der die kinematischen Komponenten parallel angeordnet sind;
- Figur 2: eine weitere Ausführungsform, bei der bei der Bewegung einer der kinematischen Komponenten die andere mitbewegt wird und
- Figur 3: eine Prinzipdarstellung einer Projektionsbelichtungsanlage für die Mikrolithographie, die in erfindungsgemäßer Weise mit kinematischen Komponenten ausgestattet ist.

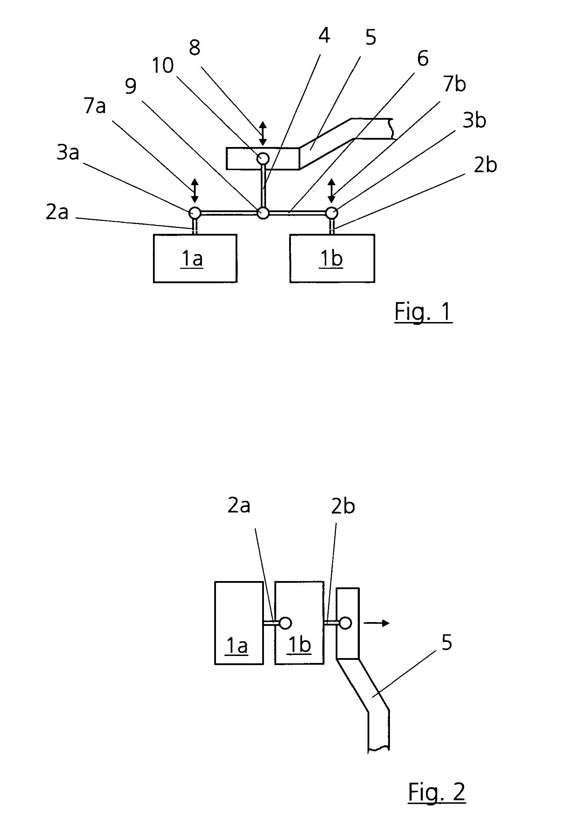

Figur 1 zeigt eine parallele Anordnung der als Piezoaktuatoren 1a und 1b ausgebildeten kinematischen Komponenten. Dabei sind die Hebel 2a und 2b der beiden Piezoaktuatoren 1a und 1b über die Gelenke 3a und 3b und die Verbindungsstange 6 miteinander verbunden. Bei einer Aktivierung des Piezoaktuators 1a bewegt sich der Hebel 2a in Richtung des Doppelpfeils 7a. Für den Fall, dass der Piezoaktuator 1b während der Aktivierung des Piezoaktuators 1a inaktiv bleibt, ergibt sich eine Bewegung der Verbindungsstange 6 um das Gelenk 3b. Im Ergebnis erfolgt eine Bewegung des über die Gelenke 9 und 10 und den Stellhebel 4 mit der Verbindungsstange 6 verbundenen optischen Elementes 5 in Richtung des Doppelpfeils 8. Entsprechendes gilt bei einer Aktivierung des Piezoaktuators 1b in Verbindung mit dem Hebel 2b in Richtung des Doppelpfeils 7b bei inaktivem Piezoaktuator 1a. Hier ergibt sich eine Bewegung der Verbindungsstange 6 um das Gelenk 3a.

Aus der Figur wird unmittelbar klar, dass bei einer gleichzeitigen Aktivierung der beiden Piezoaktuatoren 1a und 1b im Vergleich zu den vorstehend geschilderten Fall der doppelte Verfahrweg erreicht werden kann. Hieraus ergeben sich zwei Alternativen für die Realisation der in Figur 1 dargestellten Ausführungsform: Zum einen kann die Anordnung von Anfang an so ausgelegt werden, dass der gewünschte Verfahrweg des optischen Elementes 5 durch die Aktivierung lediglich eines der beiden Piezoaktuatoren 1a bzw. 1b erreicht werden kann. In diesem Fall wird beim Ausfall eines der beiden Aktuatoren nach der Detektion des Ausfalls der noch funktionierende Aktuator angesteuert; dies kann beispielsweise mittels eines Multiplexers erfolgen. Ebenso ist es denkbar, die Anordnung in der Weise auszulegen, dass der gewünschte Verfahrweg des optischen Elementes 5 dadurch erreicht wird, dass beide Piezoaktuatoren 1a und 1b gleichzeitig angesteuert werden; auf diese Weise kann ein gegenüber dem ersten geschilderten Fall doppelter Verfahrweg realisiert werden. Damit stünde nach dem Ausfall eines der beiden Piezoaktuatoren 1a oder 1b immer noch ein funktionierender Aktuator zur Verfügung, so dass die Anordnung insgesamt noch eine - wenn auch eingeschränkte - Funktionalität aufweisen würde.

Figur 2 zeigt als alternative Ausgestaltung eine Anordnung der beiden Piezoaktuatoren 1a und 1b aufeinander in der Art einer seriellen Schaltung. Dabei ist der Piezoaktuator 1b über den Hebel 2a mit dem Piezoaktuator 1a verbunden, das heißt bei einer Aktivierung des Piezoaktuators 1a bewegt sich der Piezoaktuator 1b mit und wirkt über den Hebel 2b auf das optische Element 5. Selbstverständlich können die beiden Piezoaktuatoren 1a und 1b alternativ angesteuert werden; in diesem Fall wirkt der jeweils inaktive Piezoaktuator als passives Hebelteil.

Für die in den beiden vorstehend beschriebenen Figuren gezeigten Konfigurationen ist es vorteilhaft, wenn die Anordnung in der Weise ausgelegt ist, dass bei einem Ausfall eines der Piezoaktuatoren 1a oder 1b in einer beliebigen Position das optische Element 5 noch in dem vorgesehenen Bereich bewegt werden kann. Gegebenenfalls kann der Bewegungsbereich des optischen Elementes 5 nach dem Ausfall eines der beiden Piezoaktuatoren 1a oder 1b auch dadurch angepasst werden, dass eine (nicht dargestellte) gut zugängliche Justiereinrichtung vorgesehen ist, mittels derer eine Veränderung des Bewegungsbereiches des optischen Elementes 5 vorgenommen werden kann.

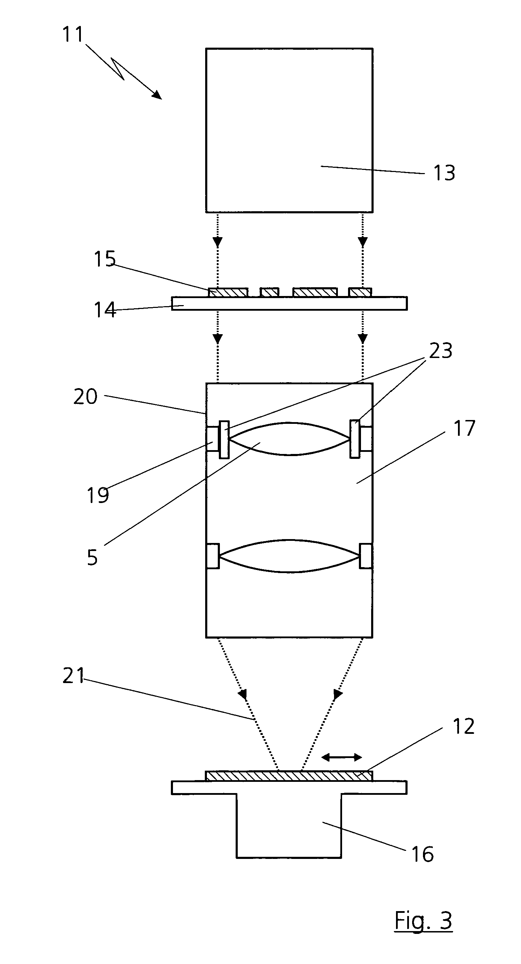

In Figur 3 ist eine entsprechend der Erfindung mit kinematischen Komponenten ausgestattete Projektionsbelichtungsanlage 11 für die Mikrolithographie dargestellt. Diese dient zur Belichtung von Strukturen auf ein mit photosensitiven Materialien beschichtetes Substrat, welches im allgemeinen überwiegend aus Silizium besteht und als Wafer 12 bezeichnet wird, zur Herstellung von Halbleiterbauelementen, wie z.B. Computerchips.

Die Projektionsbelichtungsanlage 11 besteht dabei im wesentlichen aus einer Beleuchtungseinrichtung 13, einer Einrichtung 14 zur Aufnahme und exakten Positionierung einer mit einer gitterartigen Struktur versehenen Maske, einem sogenannten Reticle 15, durch welches die späteren Strukturen auf dem Wafer 12 bestimmt werden, einer Einrichtung 16 zur Halterung, Bewegung und exakten Positionierung eben dieses Wafers 12 und einer Abbildungseinrichtung, nämlich einem Projektionsobjektiv 17, mit mehreren optischen Elementen 5, die über Fassungen 19 in einem Objektivgehäuse 20 des Projektionsobjektives 17 gelagert sind.

Das grundsätzliche Funktionsprinzip sieht dabei vor, dass die in das Reticle 15 eingebrachten Strukturen auf den Wafer 12 verkleinert abgebildet werden.

Nach einer erfolgten Belichtung wird der Wafer 12 in Pfeilrichtung weiterbewegt, so dass auf dem selben Wafer 12 eine Vielzahl von einzelnen Feldern, jeweils mit der durch das Reticle 15 vorgegebenen Struktur, belichtet wird. Aufgrund der schrittweisen Vorschubbewegung des Wafers 12 in der Projektionsbelichtungsanlage 11 wird diese häufig auch als Stepper bezeichnet.

Die Beleuchtungseinrichtung 13 stellt einen für die Abbildung des Reticles 15 auf dem Wafer 12 benötigten Projektionsstrahl 21 bereit. Als Quelle für diese Strahlung kann ein Laser oder dergleichen Verwendung finden. Die Strahlung wird in der Beleuchtungseinrichtung 13 über optische Elemente so geformt, dass der Projektionsstrahl 21 beim Auftreffen auf das Reticle 15 die gewünschten Eigenschaften hinsichtlich Durchmesser, Polarisation, Form der Wellenfront und dergleichen aufweist.

Über den Projektionsstrahl 21 wird ein Bild des Reticles 15 erzeugt und von dem Projektionsobjektiv 17 entsprechend verkleinert auf den Wafer 12 übertragen, wie bereits vorstehend erläutert wurde. Das Projektionsobjektiv 17 weist eine Vielzahl von einzelnen refraktiven, diffraktiven und/oder reflexiven optischen Elementen 5, wie z.B. Linsen, Spiegeln, Prismen, Abschlussplatten und dergleichen auf.

Im vorliegenden Beispiel ist das optische Element 5 über einen so genannten Piezokrabbler 23 mit der Fassung 19 verbunden. Dabei ist der Piezokrabbler 23 mit dem optischen Element 5 fest verbunden und bewegt sich auf der Oberfläche der Fassung 19 zusammen mit dem optischen Element 5 in Richtung der optischen Achse des Projektionsobjektives 17.

Zur Erhöhung der Zuverlässigkeit der optischen Vorrichtungen oder auch zur Anpassung an besondere Anforderungen können selbstverständlich die geschilderten Konzepte in beliebiger Weise kombiniert werden. Darüber hinaus ist eine Anwendung des geschilderten Konzeptes über das Feld kinematischer Komponenten hinaus, insbesondere beispielsweise auch für thermische Manipulatoranordnungen, ohne weiteres denkbar.

## Patentansprüche

1. Optische Vorrichtung mit mindestens einem in n Freiheitsgraden manipulierbaren optischen Element (5), wobei eine Mehrzahl von kinematischen Komponenten (1a, 1b) zur Manipulation oder Positionsbestimmung des optischen Elementes (5) vorgesehen ist, wobei die Anzahl m der kinematischen Komponenten (1a, 1b) mindestens einer Sorte die Anzahl der Freiheitsgrade n übersteigt, **dadurch gekennzeichnet, dass** mindestens einer der n Freiheitsgrade einer der Freiheitsgrade x-,y-,z-Verschiebung oder Kipp ist.

2. Vorrichtung nach Anspruch 1, **dadurch gekennzeichnet, dass** für mindestens einen der n Freiheitsgrade mindestens zwei kinematische Komponenten (1a, 1b) einer Sorte vorhanden sind.

3. Vorrichtung nach Anspruch 1, **dadurch gekennzeichnet, dass** für jeden der n Freiheitsgrade mindestens zwei kinematische Komponenten (1a, 1b) einer Sorte vorhanden sind.

4. Vorrichtung nach einem der vorangehenden Ansprüche, **dadurch gekennzeichnet, dass** einem Angriffspunkt an dem optischen Element (5) mindestens zwei kinematische Komponenten (1a, 1b) zugeordnet sind.

5. Vorrichtung nach Anspruch 4, **dadurch gekennzeichnet, dass** für einen bestimmten Freiheitsgrad mindestens eine erste kinematische Komponente (1a) in der Weise in Beziehung zu einer weiteren kinematischen Komponente (1b) angeordnet ist, dass bei einer Aktivierung der ersten kinematischen Komponente (1a) die weitere kinematische Komponente (1b) ebenfalls aktiviert wird.

6. Vorrichtung nach einem der vorangehenden Ansprüche, **dadurch gekennzeichnet, dass** es sich bei mindestens einer kinematischen Komponente (1a, 1b) um einen Aktuator handelt.

7. Vorrichtung nach Anspruch 5 und 6, **dadurch gekennzeichnet, dass** es sich bei der ersten und der weiteren kinematischen Komponente (1a, 1b) um die einzelnen Piezostapel eines Piezokrabblers (23) handelt.

8. Vorrichtung nach Anspruch 4, **dadurch gekennzeichnet, dass** für einen bestimmten Freiheitsgrad mindestens eine erste kinematische Komponente (1a) in der Weise in Beziehung zu einer weiteren kinematischen Komponente (1b) angeordnet ist, dass bei einer Aktivierung der ersten kinematischen Komponente (1a) die weitere kinematische Komponente (1b) nicht aktiviert, insbesondere nicht mitbewegt wird.

9. Vorrichtung nach einem der vorangehenden Ansprüche, **dadurch gekennzeichnet, dass** es sich bei mindestens einer kinematischen Komponente (1a, 1b) um einen Sensor handelt.

10. Projektionsbelichtungsanlage (11) für die Halbleiterlithographie, **dadurch gekennzeichnet, dass** sie eine optische Vorrichtung nach einem der vorangehenden Ansprüche 1-9 aufweist.
